(19) Europäisches Patentamt
European Patent Office
Office européen des brevets

(11) **EP 4 122 126 B1**

(12) **EUROPEAN PATENT SPECIFICATION**

(45) Date of publication and mention of the grant of the patent:
**09.10.2024 Bulletin 2024/41**

(21) Application number: **20714723.2**

(22) Date of filing: **19.03.2020**

(51) International Patent Classification (IPC):
**H04L 1/00** *(2006.01)* **H04L 1/20** *(2006.01)*

(52) Cooperative Patent Classification (CPC):
**H04L 1/0003; H04L 1/0009; H04L 1/0023; H04L 1/0057; H04L 1/0061; H04L 1/203;** H04L 1/005

(86) International application number:
**PCT/SE2020/050289**

(87) International publication number:
**WO 2021/188025 (23.09.2021 Gazette 2021/38)**

(54) **RADIO LINK ADAPTATION AT A TRANSMIT AND RECEIVE POINT**

FUNKVERBINDUNGSANPASSUNG AN EINEM SENDE- UND EMPFANGSPUNKT

ADAPTATION DE LIAISON RADIO AU NIVEAU D'UN POINT D'ÉMISSION ET DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietor: **Telefonaktiebolaget LM ERICSSON (PUBL)**
**16483 Stockholm (SE)**

(72) Inventors:
• **ABEWARDANA JAYAWICKRAMA, Beeshanga**
**NSW 2112, Ryde (AU)**
• **YAVER, Ali**
**192 79 Sollentuna (SE)**
• **SUN, Ying**
**183 60 Täby (SE)**
• **ÅHLANDER, Mats**
**169 56 Solna (SE)**

(74) Representative: **Ericsson**
**Patent Development**
**Torshamnsgatan 21-23**
**164 80 Stockholm (SE)**

(56) References cited:
WO-A2-2009/045769 US-A1- 2008 155 373
US-A1- 2010 128 765 US-B1- 6 272 183

**Description**

**TECHNICAL FIELD**

Embodiments presented herein relate to a method, a network node, a computer program, and a computer program product for radio link adaptation at a transmit and receive point.

**BACKGROUND**

In communications networks, there may be a challenge to obtain good performance and capacity for a given communications protocol, its parameters and the physical environment in which the communications network is deployed.

For example, one parameter in providing good performance and capacity for a given communications protocol in a communications network is Link Adaptation (LA). LA is used to determine which Modulation and Coding Scheme (MCS) that is optimal for a given set of wireless channel conditions. In case of uplink transmission (i.e., transmission from served terminal devices at the user-side to serving base station at the network-side), the LA scheme relies on signal to interference plus noise ratio (SINR) estimates at the base station to pick the most optimal MCS. On top of measurement inaccuracies, the delay between the measurements and the actual uplink transmission implies that the wireless channel conditions might have changed at the time of actual downlink transmission (i.e., transmission from serving base station at the network-side to served terminal devices at the user-side). Therefore, to compensate for measurement inaccuracies, a correction term is added. This correction term is based on acknowledgement (ACK) feedback and negative-acknowledgement (NACK) feedback from hybrid automatic repeat request (HARQ) processes run at the base station.

Within a given block error rate (BLER) target, an ACK would indicate that the LA could be more aggressive and thus a higher MCS than indicated by the SINR estimates should be selected. A NACK indicates the opposite and thus that the LA could be less aggressive and thus a lower MCS than indicated by the SINR estimates should be selected. In some aspects, LA aims to achieve a certain BLER target so that the outer-loop adjustment is expected to receive one single NACK for every N new transmissions (where N = 10 if the BLER is 10%). This implies during a channel coherent interval there should be sufficiently many of ACKs and NACKs for the LA to make reliable outer-loop adjustment. Making such outer-loop adjustments is commonly referred to as Outer-loop Link Adaptation (OLLA).

In some applications, such as ultra-reliable low-latency communication (URLLC) applications, a very high reliability, such as up to 99.9999% reliability is desired, or even required. This implies that a NACK is allowed to be received only once per every 1,000,000 new transmission. In this respect, the wireless channel conditions vary depending on movements of the terminal device as well as on environmental changes. Therefore, there are in most practical cases not enough NACKs received within the channel coherent time for the LA to reliably know how much further the MCS can be increased within the expected BLER target. Additionally, upon having received one single NACK, this does not guarantee, or even indicate, that the wireless channel conditions will be unfavorable for the next 1,000,000 new transmissions. The wireless channel conditions could very well be favorable for a significant fraction of the 1,000,000 new transmissions that follow after one single NACK has been received.

Moreover, existing OLLA aims to maximize system capacity by choosing the highest possible MCS within a given BLER target. For URLLC applications, system capacity is of secondary importance with the primary focus on maintaining the reliability, i.e. the robustness. In other words, maintaining an MCS scheme that reliably delivers ACKs from the HARQ processes is the goal for a robust LA scheme. Therefore, traditional OLLA is not suitable for outer-loop adjustments in the context of URLLC applications.

One approach is for the LA scheme to always pick the most robust MCS to, if possible, avoid any NACKs. However, this approach sometimes results in a much lower MCS being picked than what the wireless channel conditions permit at the time of the transmission and is not suitable for transmissions where capacity also is important.

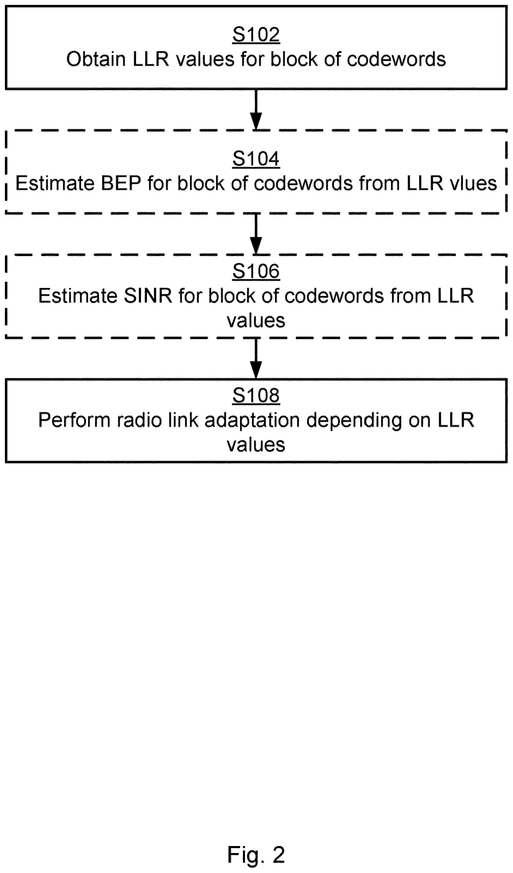

Another approach presented in US 2010/128765 is to adapt the transmission parameters depending on the reliability of iteratively decoded data on the receiving side of the radio link. US 2008/0155373 proposes to use forward error correction FEC code at the transmitter side, and the FEC, the modulation scheme and power is adapted in relation predicted performance (Fig. 2). Nevertheless, there is still a need for an improved link adaptation.

**SUMMARY**

An object of embodiments herein is to provide efficient link adaptation that does not suffer from the issues noted above, or at least where the above noted issues are mitigated to reduced.

According to a first aspect there is presented a method for radio link adaptation at a transmit and receive point, as is defined by claim 1.

According to a second aspect there is presented a network node for radio link adaptation at a transmit and receive point, as is defined by claim 14.

According to a third aspect there is presented a computer program for radio link adaptation at a transmit and receive point, as is defined by claim 16. Advantageously, these aspects provide efficient link adaptation.

Advantageously, the proposed link adaptation does not suffer from the issues noted above.

Advantageously, the proposed link adaptation enables, by means of using granular information as defined by the LLR values, adjustment of the radio link adaptation parameter values on a very fine scale.

Advantageously, the proposed link adaptation is suitable for any BLER target any wireless channel conditions; Advantageously, the proposed link adaptation is suitable for applications requiring high reliability, such as URLLC applications.

Advantageously, these aspects enable ACKs to be differentiated when performing radio link adaptation of the radio link.

Advantageously, these aspects enable determination of the possibility of a block error, before the error occurs since the LLR values can indicate that wireless channel conditions are worsening, well before a block error occurs. Hence, it is possible to estimate when a NACK might occur, well before the NACK actually occurs.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating a communication network according to embodiments;

Fig. 2 is a flowchart of methods according to embodiments;

Fig. 3 is a block diagram of a network node according to an embodiment;

Fig. 4 shows simulation results according to an embodiment;

Fig. 5 is a schematic diagram showing functional units of a network node according to an embodiment;

Fig. 6 is a schematic diagram showing functional modules of a network node according to an embodiment;

Fig. 7 shows one example of a computer program product comprising computer readable storage medium according to an embodiment;

Fig. 8 is a schematic diagram illustrating a telecommunication network connected via an intermediate network to a host computer in accordance with some embodiments; and

Fig. 9 is a schematic diagram illustrating host computer communicating via a radio base station with a terminal device over a partially wireless connection in accordance with some embodiments.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept as defined by the claims to those skilled in the art. Like numbers refer to like elements throughout the description. Any step or feature illustrated by dashed lines should be regarded as optional.

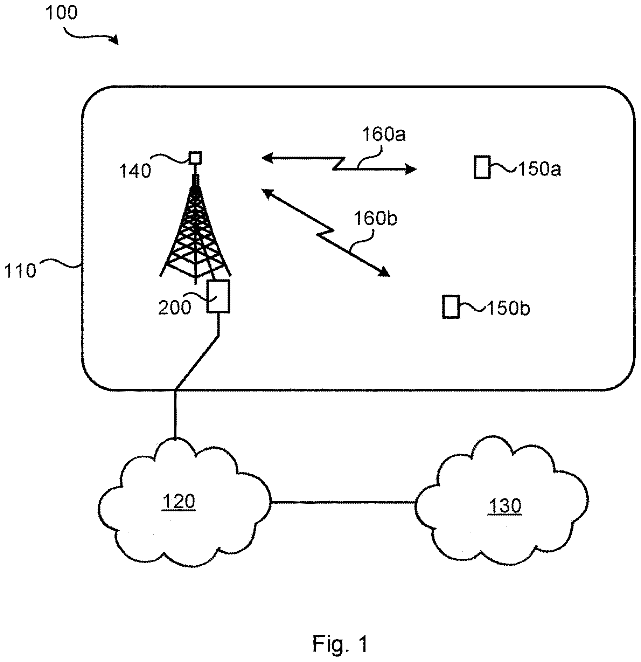

**Fig. 1** is a schematic diagram illustrating a communication network 100 where embodiments presented herein can be applied. The communication network 100 could be a third generation (3G) telecommunications network, a fourth generation (4G) telecommunications network, or a fifth (5G) telecommunications network, or any advancement thereof, and support any 3GPP telecommunications standard, where applicable.

The communication network 100 comprises a network node 200 configured to provide network access to terminal devices 150a, 150b over radio links 160a, 160b in a radio access network 110. The radio access network 110 is operatively connected to a core network 120. The core network 120 is in turn operatively connected to a service network 130, such as the Internet. The terminal devices 150a, 150b are thereby enabled to, via the network node 200, access services of, and exchange data with, the service network 130.

The network node 200 comprises, is collocated with, is integrated with, or is in operational communications with, a Transmit and Receive Point (TRP) 140. Examples of network nodes 200 are radio access network nodes, radio base stations, base transceiver stations, Node Bs, evolved Node Bs, gNBs, access points, access nodes, and backhaul nodes. Examples of terminal devices 150a, 150b are wireless devices, mobile stations, mobile phones, User Equipment (UE), handsets, wireless local loop phones, smartphones, laptop computers, tablet computers, network equipped sensors, network equipped vehicles, and so-called Internet of Things devices.

As noted above there is still a need for an improved link adaptation of the radio links 160a, 160b.

As a non-limiting illustrative example, consider a low-density parity-check (LDPC) decoder as an example of an information decoder that takes LLR values as input. Let the $n^{th}$ received bit be $y_n$, and the transmitted bit be $x_n$. The LLR value of the $n^{th}$ received bit at the input to the LDPC decoder is denoted $LLR_n^{in}$ and is determined as:

$$LLR_n^{in}(x_n|y_n) = \log\left(\frac{P(x_n = 0|y_n)}{P(x_n = 1|y_n)}\right)$$

The $LLR_n^{in}$ values are then used during iterative message parsing between variable nodes and check nodes in the LDPC decoder. For each iteration, the $LLR_n^{in}$ values are updated indicating the probability of that bit being 1 or 0. After a certain exit criterion has been satisfied, the LDPC decoder stops the message parsing. The LLR values at the output of the decoder, denoted $LLR_n^{out}$ and representing the final iteration of the $LLR_n^{in}$ values, are then used for deciding on the decoded bits as follows:

$$x_n = \begin{cases} 1, & LLR_n^{out}(x_n|y_n) < 0 \\ 0, & LLR_n^{out}(x_n|y_n) \geq 0 \end{cases}$$

Then a CRC checksum is calculated based on the decoded bits. If the CRC checksum is a pass, a HARQ ACK is triggered, and otherwise a HARQ NACK is triggered.

In the existing LA schemes, if a HARQ ACK is triggered, the outer-loop LA will take an incremental (+) adjustment step to the estimated SINR or the estimated MCS. If a HARQ NACK is triggered, a decremental (-) adjustment step is taken. Often the increments are much smaller than the decrements, and the exact step size depends on the BLER target of the LA.

However, as noted above, performing LA based only on ACKs and NACKs might not be sufficient for some applications (such as URLLC applications), for some BLER targets, and/or for some wireless channel conditions since it could result in that the MCS is adjusted too coarsely or that an unnecessary robust MCS is selected.

The embodiments disclosed herein therefore relate to mechanisms for radio link adaptation at a transmit and receive point 140. In order to obtain such mechanisms there is provided a network node 200, a method performed by the network node 200, a computer program product comprising code, for example in the form of a computer program, that when run on a network node 200, causes the network node 200 to perform the method.

Fig. 2 is a flowchart illustrating embodiments of methods for radio link adaptation at a transmit and receive point 140. The methods are performed by the network node 200. The methods are advantageously provided as computer programs 720.

The herein disclosed embodiments are based on LLR-dependent link adaptation. Therefore, the network node 200 is configured to perform step S102:

S102: The network node 200 obtains LLR values for a block of codewords. The LLR values are output from an information decoder decoding the block of codewords. Hence, in view of the above, these LLR values are the LLR values at the output of the information decoder, denoted $LLR_n^{out}$. The block of codewords has been communicated over a radio link 160a, 160b between the TRP 140 and a terminal device 150a, 150b.

Link adaptation is then performed using the obtained LLR values. In particular, the network node 200 is configured to perform step S108:

S108: The network node 200 performs radio link adaptation of the radio link 160a, 160b depending on the LLR values by selecting radio link adaptation parameter values. Which radio link adaptation parameter values to select depends on the LLR values.

This provides link adaptation that is suitable for applications such as URLLC applications, for all BLER targets, and for all wireless channel conditions since it enables the MCS to be more finely adjusted than when the link adaptation only is dependent on ACKs and NACKs.

The LLR values can be used to predict whether the block of codewords will be correctly decoded or not.

Embodiments relating to further details of radio link adaptation at a transmit and receive point 140 as performed by the network node 200 will now be disclosed. There could be different types of radio link adaptation that is performed in S108. In some embodiments, the radio link adaptation is an outer-loop radio link adaptation of the transmit and receive point 140. Further, in some embodiments, the radio link adaptation parameter values are defined by modulation and coding scheme values. There could be different ways in which the radio link adaptation parameter values are selected. In some aspects, selecting the radio link adaptation parameter values involves incrementing or decrementing currently used modulation and coding scheme values in steps.

There could be different ways in which the selection of the radio link adaptation parameter values depends on the LLR values. According to the claimed invention, the selection is based on comparing the LLR values to one or more threshold values. That is, in which radio link adaptation parameter values to select depends on whether the LLR values are above or below a threshold value. In this respect, according to the claimed invention, selecting the radio link adaptation parameter values involves incrementing or decrementing currently used modulation and coding scheme values in steps depending on whether the LLR values are above or below the threshold value. Still further in this respect, according to the claimed invention, which step-size to use when incrementing or decrementing the currently used modulation and coding scheme values depends on the LLR values. Although some of the examples disclosed herein relate to LDPC decoders, there could be other types of information decoders from which the LLR values are obtained. For example, the information decoder could be any of: an LDPC decoder, a polar code decoder, a turbo decoder. Further, in some examples the information decoder is an iterative decoder.

When the information decoder is an iterative decoder, the number of iterations used by the information decoder and/or other intermediate outputs of the information decoder could be used as input to the decision of which radio link adaptation parameter values to select. In particular, in some embodiments, which radio link adaptation parameter values to select depends on how many iterations were used by the information decoder to iteratively decode the block of codewords.

In some aspects, a cyclic redundancy check (CRC) checksum is calculated based on the LLR values and information of whether the CRC checksum is a pass or a fail could be used as input to the decision of which radio link adaptation parameter values to select. In particular, in some embodiments, which radio link adaptation parameter values to select depends on whether the LLR values in binary representation passes or fails a CRC. An ACK will be issued when the CRC checksum is a pass, and otherwise (i.e., when the CRC checksum is a fail) a NACK will be issued.

As noted above, the LLR values considered thus far for the radio link adaptation of the radio link 160a, 160b are the LLR values at the output of the information decoder, denoted $LLR_n^{out}$. In further aspects, the radio link adaptation of the radio link 160a, 160b is also based on LLR values at the input of the information decoder, denoted $LLR_n^{in}$. Thus, in some embodiments, which radio link adaptation parameter values to select depends on how much the $LLR_n^{out}$ values differ from the $LLR_n^{in}$ values being input to the information decoder. In some embodiments, which radio link adaptation parameter values to select depends on how much the $LLR_n^{out}$ values differ from the $LLR_n^{in}$ values only when the $LLR_n^{out}$ values in binary representation passes the cyclic redundancy check.

In some aspects, the radio link adaptation of the radio link 160a, 160b is based on the number of bits flipped by the information decoder. In particular, in some embodiments, which radio link adaptation parameter values to select depends on how many $LLR_n^{out}$ values in binary representation have been flipped in comparison to the *LLR*™ values in binary representation.

In further detail, when the CRC checksum is a pass, a soft indicator, hereinafter denoted S, can be determined as follows. First, let $L_n$ be an indicator that represents if the sign of LLR value n has changed from *LLR*™ to $LLR_n^{out}$ or not. That is:

$$L_n = \begin{cases} 1, & LLR_n^{in} \cdot LLR_n^{out} < 0 \mid \text{CRC pass} \\ 0, & LLR_n^{in} \cdot LLR_n^{out} \geq 0 \mid \text{CRC pass} \end{cases}$$

Then, let $\hat{S}$ represent the total number of LLR values where the sign changed from $LLR_n^{in}$ to $LLR_n^{out}$. Hence, S can be calculated by summing all indicators $L_n$. That is:

$$\hat{S} = \sum L_n$$

Essentially $\hat{S}$ thus represents the total number of bits flipped by the information decoder. Consider a threshold $T$, which is a function $f_1$ of the selected MCS and the code block size (CBS), i.e., the size of each block of codewords, of the decoded transmission. That is:

$$T = f_1(\text{MCS}, \text{CBS})$$

The soft indicator is a function $f_2$ of $\hat{S}$ and the threshold $T$ and can thus be calculated as:

$$S = f_2(\hat{S}, T)$$

The step size can then be determined as a function $f_3$ of $S$. That is:

$$\text{Step size} = f_3(S)$$

Depending on the sign of S, the step size can be positive or negative. This implies an adjustment to increase or to decrease the SINR estimate or the MCS when a HARQ or an ACK is received. This is a distinct difference to the existing LA schemes that generally increase the MCS when an ACK is received.

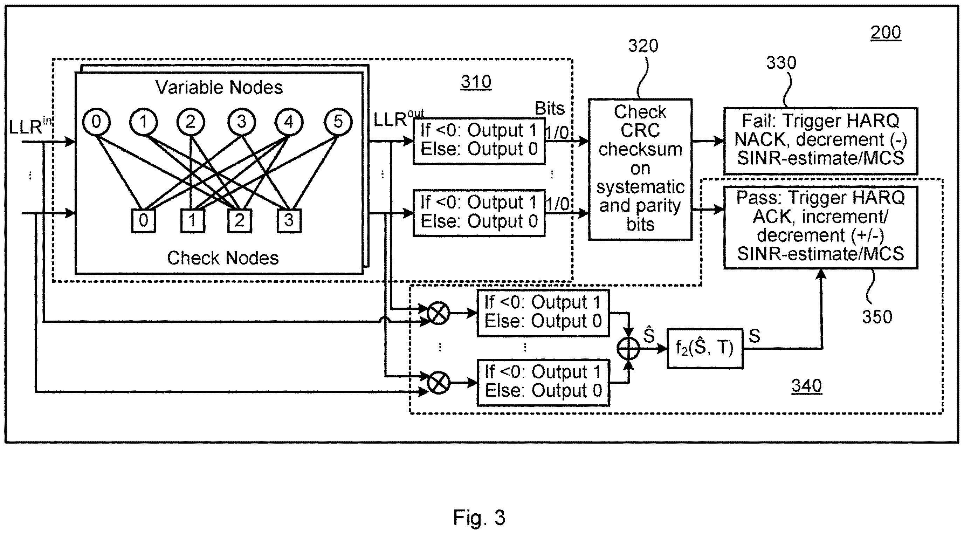

Intermediate reference is here made to Fig. 3 that schematically illustrates how the soft indicator S can be generated using an information decoder, here represented by an LDPC decoder 310 operating on a code corresponding to six variable nodes and four check nodes.

The bits produced by the LDPC decoder 310 are fed to a CRC checksum calculator 320 that calculates the CRC checksum on the systematic bits and the parity bits. If the CRC checksum is a fail, the CRC checksum calculator 320 sends an indicator to NACK trigger module 330 to trigger a NACK to be sent and the SINR estimate and/or MCS to be decremented. If the CRC checksum is a pass, the CRC checksum calculator 320 sends an indicator to ACK trigger module 350 to trigger an ACK to be sent. However, whether the SINR estimate and/or MCS should be incremented or decremented is controlled by input, in the form of the S value as determined by soft indicator calculator module 340. The $LLR_n^{in}$ values and the $LLR_n^{out}$ values are therefore fed to soft indicator calculator module 340 for calculation of $\hat{S}$ and then of S. Whether the SINR estimate and/or MCS should be incremented or decremented in ACK trigger module 350 is then dependent by the S value, as fed to the ACK trigger module 350.

If the transport block size (TBS) is smaller than or equal to the CBS, there will be only one block of codewords per each transport block (TB). In this case the herein disclosed radio link adaptation of the radio link 160a, 160b can be applied as is. However, if TBS is larger than the CBS, each TB comprises two or more block of codewords. In case where the information decoder on one block of codewords at a time, this implies running the information decoder more than one time to fully decode the complete TB. In the latter case, one value of the soft indicator is produced per each block of codewords. The soft indicators for all the blocks of codewords might then be combined into one single soft indicator for the complete TB and this single soft indicator is then used as input to the radio link adaptation of the radio link 160a, 160b.

In some aspects, information of the number of bits flipped by the information decoder is only used when the CRC checksum is a pass (i.e., when the decoding of the block of codewords is successful). That is, in some embodiments, which radio link adaptation parameter values to select depends on how many $LLR_n^{out}$ values in binary representation have been flipped in comparison to the *LLR*™ values in binary representation only when the $LLR_n^{out}$ values in binary representation passes the cyclic redundancy check.

Similar calculations can be made by instead considering how many $LLR_n^{out}$ values in binary representation that have not been flipped in comparison to the $LLR_n^{in}$ values in binary representation.

Further, in addition to, or as an alternative to, only observing the $LLR_n^{in}$ values and the $LLR_n^{out}$ values, the LLR values at the end of each iteration of the information decoder might be considered as input to the radio link adaptation of the radio link 160a, 160b.

In some aspects, the LLR values at the end of each iteration are compared to the $LLR_n^{out}$ values and the difference is used as input to the radio link adaptation of the radio link 160a, 160b. That is, in some embodiments, the LLR values output from the information decoder after its final iteration are defined by the $LLR_n^{out}$ values, one set of intermediate LLR values are output from the information decoder per each iteration, and where which radio link adaptation parameter values to select depends on how much the intermediate LLR values at each iteration differ from the $LLR_n^{out}$ values.

In some aspects, how much the LLR values change from one iteration to the next is used as input to the radio link adaptation of the radio link 160a, 160b. That is, in some embodiments, one set of intermediate LLR values are output from the information decoder per each iteration, and which radio link adaptation parameter values to select depends on how much the intermediate LLR values change from iteration to iteration.

There could be further ways to select the radio link adaptation parameter values, regardless if the CRC checksum is a pass or a fail. Embodiments relating thereto will now be disclosed in more details with continued reference to **Fig. 2.**

In some aspects, which radio link adaptation parameter values to select is dependent on the estimated bit error probability (BEP) of the block of codewords. In particular, in some embodiments, the network node 200 is configured to perform (optional) step S104:

S104: The network node 200 estimates the BEP for the block of codewords from the $LLR_n^{out}$ values. Which radio link adaptation parameter values to select then depends on the BEP.

In further detail, by using the definition of the LLR, it is possible to estimate the probability that all the systematic bits have been correctly decoded. This measurement is hereinafter referred to as the block error probability (BLEP). The BLEP for the systematic decoded bits can be defined as follows:

$$\text{BLEP} = 1 - \prod_s (1 - \text{BEP}(s))$$

The BEP is the probability that a systematic bit, s, is incorrectly decoded. The BEP is derived from the definition of the LLR. That is:

$$\text{BEP}(n) = \frac{1}{1 - e^{|LLR_n^{out}(x_n|y_n)|}}$$

The BLEP measurement will accurately reflect the probability that the decoding output is correct or incorrect.
The pure BLEP value or a filtered, or averaged, value of the BLEP can be used as input to the radio link adaptation of the radio link 160a, 160b. According to one non-limiting example, when BLEP < target BLER, then SINR value used for radio link adaptation of the radio link 160a, 160b is increased by stepping up the outer-loop SINR adjustment value, and otherwise the SINR value used for radio link adaptation of the radio link 160a, 160b is decreased by stepping down the outer-loop SINR adjustment value.
In still further aspects, SINR values are thus used as input to the radio link adaptation of the radio link 160a, 160b. In particular, in some embodiments, the network node 200 is configured to perform (optional) step S106:S106: The network node 200 estimates the SINR for the block of codewords from the LLR values. Which radio link adaptation parameter values to select then depends on the SINR for the block of codewords.

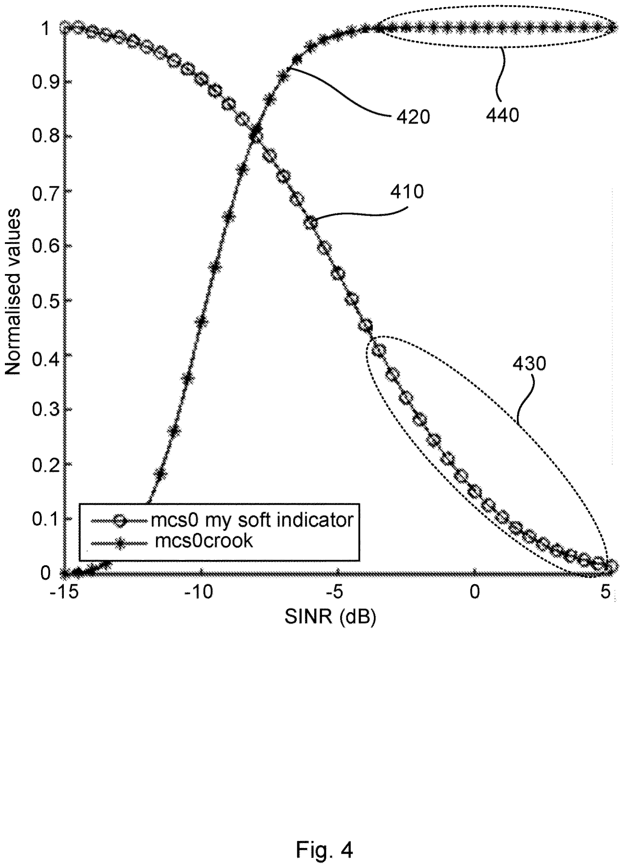

Simulation results are shown in **Fig. 4**. The simulation results are for simulations performed for Scenario A.3-2, indoor hot-spot and factory automation, defined in 3GPP TS 38.824 "Study on physical layer enhancements for NR ultra-reliable and low latency case (URLLC)" V16.0.0. During the simulations, values of $\hat{S}$ were collected together with the CRC checksum pass/fail status per each block of codewords decoded by the LDPC decoder. The simulations were performed without including any interference, and hence the signal to noise ratio (SNR) is equal to the SINR. As above, let $\hat{S}$ represent the total number of LLR values where the sign changed from $LLRn$ to $LLR_n^{out}$.

At 410 is shown the mean of $\hat{S}$ per SINR point, normalized to the range [0, 1]. The values in this curve can be used for generating the soft indicator S and the outer-loop adjustment step size. At 420 is shown the mean number of blocks of codewords that pass the CRC checksum, i.e., resulting in ACKs, normalized to the same range [0, 1]. For some applications, such as URLLC applications, operation is performed at reliability levels in the order of 99.999%. Therefore, consider the two curves 410, 420 in the SINR range above -4 dB, i.e., in regions 430 and 440 of the curves 410 and 420, respectively. In region 440, curve 420 is almost flat, whereas curve 410 has a distinct gradient, or slope, in region 430. Having a gradient, or slope, in this SINR region is key as it allows ACKs to be differentiated with a soft indicator that has a much higher granularity and hence is better suited as input to the radio link adaptation of the radio link 160a, 160b.

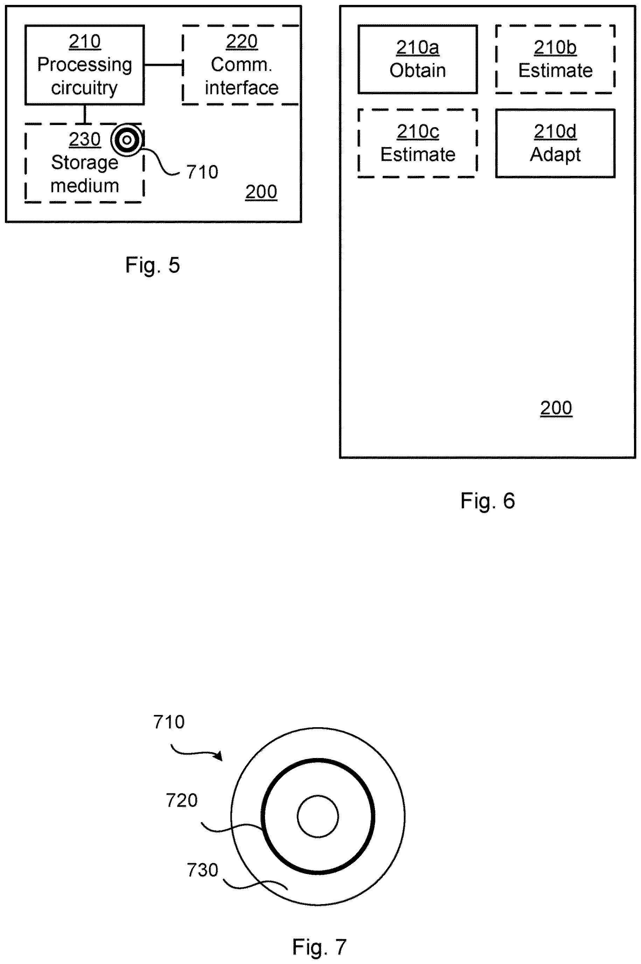

**Fig. 5** schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 710 (as in Fig. 7), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, as disclosed above. For example, the storage medium 230 may store the set of operations, and the processing circuitry 210 maybe configured to retrieve the set of operations from the storage medium 230 to cause the network node 200 to perform the set of operations. The set of operations maybe provided as a set of executable instructions.

Thus, the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The network node 200 may further comprise a communications interface 220 at least configured for communications with other entities, functions, nodes, and devices in, or served by, the communication network 100 of Fig. 1, such as the TRP 140 and the terminal devices 150a, 150b as well as the core network 120. As such the communications interface 220 may comprise one or more transmitters and receivers, comprising analogue and digital components. The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

Fig. 6 schematically illustrates, in terms of a number of functional modules, the components of a network node 200 according to an embodiment. The network node 200 of Fig. 6 comprises a number of functional modules; an obtain module 210a configured to perform step S102, and an adapt module 210d configured to perform step S108. The network node 200 of Fig. 6 may further comprise a number of optional functional modules, such as any of an (first) estimate module 210b configured to perform step S104, and an (second) estimate module 210c configured to perform step S106. In general terms, each functional module 210a-210d may in one embodiment be implemented only in hardware and in another embodiment with the help of software, i.e., the latter embodiment having computer program instructions stored on the storage medium 230 which when run on the processing circuitry makes the network node 200 perform the corresponding steps mentioned above in conjunction with Fig 6. It should also be mentioned that even though the modules correspond to parts of a computer program, they do not need to be separate modules therein, but the way in which they are implemented in software is dependent on the programming language used. Preferably, one or more or all functional modules 210a-210d may be implemented by the processing circuitry 210, possibly in cooperation with the communications interface 220 and/or the storage medium 230. The processing circuitry 210 may thus be configured to from the storage medium 230 fetch instructions as provided by a functional module 210a-210d and to execute these instructions, thereby performing any steps as disclosed herein.

The network node 200 may be provided as a standalone device or as a part of at least one further device. For example, the network node 200 may be provided in a node of the radio access network or in a node of the core network. Alternatively, functionality of the network node 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time.

Thus, a first portion of the instructions performed by the network node 200 may be executed in a first device, and a second portion of the of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 5 the processing circuitry 210 may be distributed among a plurality of devices, or nodes. The same applies to the functional modules 210a-210d of Fig. 6 and the computer program 720 of Fig. 7.

**Fig. 7** shows one example of a computer program product 710 comprising computer readable storage medium 730. On this computer readable storage medium 730, a computer program 720 can be stored, which computer program 720 can cause the processing circuitry 210 and thereto operatively coupled entities and devices, such as the communications interface 220 and the storage medium 230, to execute methods according to embodiments described herein. The computer program 720 and/or computer program product 710 may thus provide means for performing any steps as herein disclosed.

In the example of Fig. 7, the computer program product 710 is illustrated as an optical disc, such as a CD (compact disc) or a DVD (digital versatile disc) or a Blu-Ray disc. The computer program product 710 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 720 is here schematically shown as a track on the depicted optical disk, the computer program 720 can be stored in any way which is suitable for the computer program product 710.

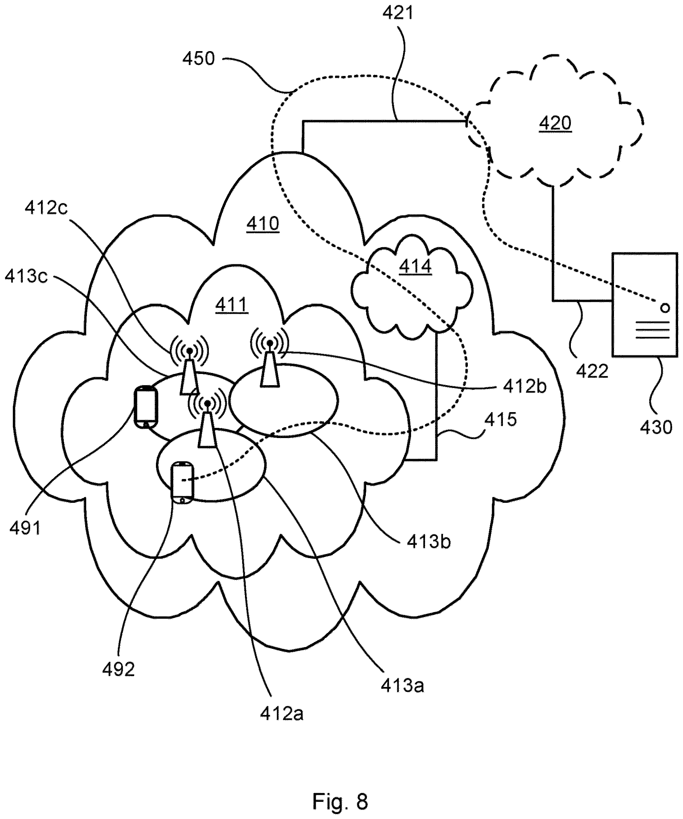

**Fig. 8** is a schematic diagram illustrating a telecommunication network connected via an intermediate network 420 to a host computer 430 in accordance with some embodiments. In accordance with an embodiment, a communication system includes telecommunication network 410, such as a 3GPP-type cellular network, which comprises access network 411, such as radio access network 110 in Fig. 1, and core network 414, such as core network 120 in Fig. 1. Access network 411 comprises a plurality of radio access network nodes 412a, 412b, 412c, such as NBs, eNBs, gNBs (each corresponding to the network node 200 of Fig. 1) or other types of wireless access points, each defining a corresponding coverage area, or cell, 413a, 413b, 413c. Each radio access network nodes 412a, 412b, 412c is connectable to core network 414 over a wired or wireless connection 415. A first UE 491 located in coverage area 413c is configured to wirelessly connect to, or be paged by, the corresponding network node 412c. A second UE 492 in coverage area 413a is wirelessly connectable to the corresponding network node 412a. While a plurality of UE 491, 492 are illustrated in this example, the disclosed embodiments are equally applicable to a situation where a sole UE is in the coverage area or where a sole terminal device is connecting to the corresponding network node 412. The UEs 491, 492 correspond to the terminal devices 150a, 150b of Fig. 1.

Telecommunication network 410 is itself connected to host computer 430, which may be embodied in the hardware and/or software of a standalone server, a cloud-implemented server, a distributed server or as processing resources in a server farm. Host computer 430 maybe under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Fig. 8 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, network node 412 may not or need not be informed about the past routing of an incoming downlink communication with data originating from host computer 430 to be forwarded (e.g., handed over) to a connected UE 491. Similarly, network node 412 need not be aware of the future routing of an outgoing uplink communication originating from the UE 491 towards the host computer 430.

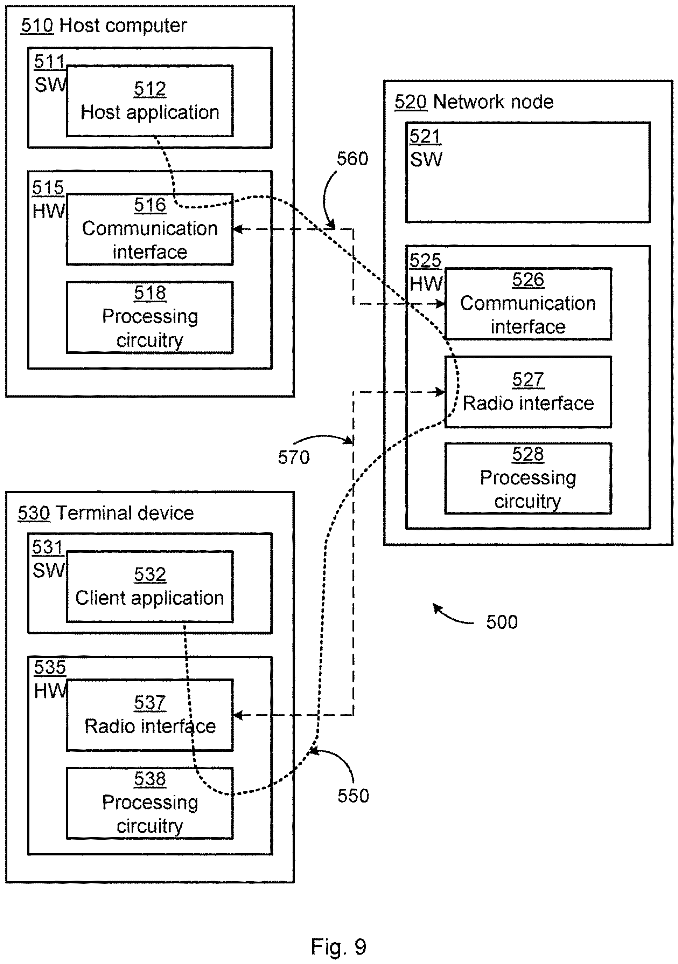

**Fig. 9** is a schematic diagram illustrating host computer communicating via a radio access network node with a UE over a partially wireless connection in accordance with some embodiments. Example implementations, in accordance with an embodiment, of the UE, radio access network node and host computer discussed in the preceding paragraphs will now be described with reference to Fig. 9. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. The UE 530 corresponds to the terminal devices 150a, 150b of Fig. 1. In providing the service to the remote user, host application 512 may provide user data which is transmitted using OTT connection 550.

Communication system 500 further includes radio access network node 520 provided in a telecommunication system and comprising hardware 525 enabling it to communicate with host computer 510 and with UE 530. The radio access network node 520 corresponds to the network node 200 of Fig. 1. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Fig. 9) served by radio access network node 520. Communication interface 526 may be configured to facilitate connection 560 to host computer 510. Connection 560 may be direct or it may pass through a core network (not shown in Fig. 9) of the telecommunication system and/or through one or more intermediate networks outside the telecommunication system. In the embodiment shown, hardware 525 of radio access network node 520 further includes processing circuitry 528, which may comprise one or more programmable processors, application-specific integrated circuits, field programmable gate arrays or combinations of these (not shown) adapted to execute instructions. Radio access network node 520 further has software 521 stored internally or accessible via an external connection.

Communication system 500 further includes UE 530 already referred to. Its hardware 535 may include radio interface 537 configured to set up and maintain wireless connection 570 with a radio access network node serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides. It is noted that host computer 510, radio access network node 520 and UE 530 illustrated in Fig. 9 may be similar or identical to host computer 430, one of network nodes 412a, 412b, 412c and one of UEs 491, 492 of Fig. 8, respectively. This is to say, the inner workings of these entities may be as shown in Fig. 9 and independently, the surrounding network topology may be that of Fig. 8.

In Fig. 9, OTT connection 550 has been drawn abstractly to illustrate the communication between host computer 510 and UE 530 via network node 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and radio access network node 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may reduce interference, due to improved classification ability of airborne UEs which can generate significant interference.

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect network node 520, and it maybe unknown or imperceptible to radio access network node 520. Such procedures and functionalities may be known and practiced in the art. In certain embodiments, measurements may involve proprietary UE signaling facilitating host computer's 510 measurements of throughput, propagation times, latency and the like. The measurements maybe implemented in that software 511 and 531 causes messages to be transmitted, in particular empty or 'dummy' messages, using OTT connection 550 while it monitors propagation times, errors etc.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for radio link adaptation at a transmit and receive point (140), the method being performed by a network node (200), the method comprising:

   obtaining (S102) log-likelihood ratio, LLR, values for a block of codewords, wherein the LLR values are output from an information decoder decoding the block of codewords, and wherein the block of codewords has been communicated over a radio link (160a, 160b) between the transmit and receive point (140) and a terminal device (150a, 150b); and
   performing (S108) radio link adaptation of the radio link (160a, 160b) depending on the LLR values by selecting radio link adaptation parameter values, wherein which radio link adaptation parameter values to select depends on the LLR values, wherein the radio link adaptation parameter values are defined by modulation and coding scheme values, wherein which radio link adaptation parameter values to select depends on whether the LLR values are above or below a threshold value, and wherein selecting radio link adaptation parameter values involves incrementing or decrementing currently used modulation and coding scheme values in steps depending on whether the LLR values are above or below the threshold value, wherein which step-size to use when incrementing or decrementing the currently used modulation and coding scheme values depends on the LLR values.

2. The method according to any of claim 1, wherein the information decoder is any of: a low-density parity-check, LDPC, decoder, a polar code decoder, a turbo decoder.

3. The method according to any of the preceding claims, wherein the information decoder is an iterative decoder.

4. The method according to claim 3, wherein which radio link adaptation parameter values to select depends on how many iterations were used by the information decoder to iteratively decode the block of codewords.

5. The method according to any of the preceding claims, wherein which radio link adaptation parameter values to select depends on whether the LLR values in binary representation passes or fails a cyclic redundancy check.

6. The method according to any of the preceding claims, wherein the LLR values are denoted LLR-out values, and wherein which radio link adaptation parameter values to select depends on how much the LLR-out values differ from LLR values, denoted LLR-in values, being input to the information decoder.

7. The method according to a combination of claim 5 and claim 6, wherein which radio link adaptation parameter values to select depends on how much the LLR-out values differ from the LLR-in values only when the LLR-out values in binary representation passes the cyclic redundancy check.

8. The method according to claim 6, wherein which radio link adaptation parameter values to select depends on how many LLR-out values in binary representation have been flipped in comparison to the LLR-in values in binary representation.

9. The method according to a combination of claim 5 and claim 8, wherein which radio link adaptation parameter values to select depends on how many LLR-out values in binary representation have been flipped in comparison to the LLR-in values in binary representation only when the LLR-out values in binary representation passes the cyclic redundancy check.

10. The method according to claim 3, wherein the LLR values output from the information decoder after its final iteration are denoted final LLR values, wherein one set of intermediate LLR values are output from the information decoder per each iteration, and wherein which radio link adaptation parameter values to select depends on how much the intermediate LLR values at each iteration differ from the final LLR values.

11. The method according to claim 3, wherein one set of intermediate LLR values are output from the information decoder per each iteration, and wherein which radio link adaptation parameter values to select depends on how much the intermediate LLR values change from iteration to iteration.

12. The method according to any of claims 1 to 5, further comprising:
estimating (S104) a bit error probability, BEP, for the block of codewords from the LLR values, and wherein which radio link adaptation parameter values to select depends on the BEP.

13. The method according to any of the preceding claims, wherein the radio link adaptation is an outer-loop radio link adaptation of the transmit and receive point (140).

14. A network node (200) for radio link adaptation at a transmit and receive point (140), the network node (200) comprising processing circuitry (210), the processing circuitry being configured to cause the network node (200) to:

obtain log-likelihood ratio, LLR, values for a block of codewords, wherein the LLR values are output from an information decoder decoding the block of codewords, and wherein the block of codewords has been communicated over a radio link (160a, 160b) between the transmit and receive point (140) and a terminal device (150a, 150b); and
perform radio link adaptation of the radio link (160a, 160b) depending on the LLR values by selecting radio link adaptation parameter values, wherein which radio link adaptation parameter values to select depends on the LLR values, wherein the radio link adaptation parameter values are defined by modulation and coding scheme values, wherein which radio link adaptation parameter values to select depends on whether the LLR values are above or below a threshold value, wherein selecting radio link adaptation parameter values involves incrementing or decrementing currently used modulation and coding scheme values in steps depending on whether the LLR values are above or below the threshold value, and wherein which step-size to use when incrementing or decrementing the currently used modulation and coding scheme values depends on the LLR values.

15. The network node (200) according to claim 14, further being configured to perform the method according to any of claims 2 to 13.

16. A computer program (720) for radio link adaptation at a transmit and receive point (140), the computer program comprising computer code which, when run on processing circuitry (210) of a network node (200), causes the network node (200) to:

obtain (S102) log-likelihood ratio, LLR, values for a block of codewords, wherein the LLR values are output from an information decoder decoding the block of codewords, and wherein the block of codewords has been communicated over a radio link (160a, 160b) between the transmit and receive point (140) and a terminal device (150a, 150b); and
perform (S108) radio link adaptation of the radio link (160a, 160b) depending on the LLR values by selecting radio link adaptation parameter values, wherein which radio link adaptation parameter values to select depends on the LLR values, wherein the radio link adaptation parameter values are defined by modulation and coding scheme values, wherein which radio link adaptation parameter values to select depends on whether the LLR values are above or below a threshold value, and wherein selecting radio link adaptation parameter values involves incrementing or decrementing currently used modulation and coding scheme values in steps depending on whether the LLR values are above or below the threshold value, wherein which step-size to use when incrementing or decrementing the currently used modulation and coding scheme values depends on the LLR values.

**Patentansprüche**

1. Verfahren zur Funkverbindungsanpassung an einem Sende- und Empfangspunkt (140), wobei das Verfahren von einem Netzwerkknoten (200) durchgeführt wird, wobei das Verfahren umfasst:

Erhalten (S102) von Log-Likelihood-Ratio-, LLR-, Werten für einen Block von Codewörtern, wobei die LLR-Werte von einem Informationsdecoder ausgegeben werden, der den Block von Codewörtern decodiert, und wobei der Block von Codewörtern über eine Funkverbindung (160a, 160b) zwischen dem Sende- und Empfangspunkt (140) und einer Endgerätvorrichtung (150a, 150b) kommuniziert worden ist; und

Durchführen (S108) einer Funkverbindungsanpassung der Funkverbindung (160a, 160b) in Abhängigkeit von den LLR-Werten durch Auswählen von Funkverbindungsanpassungsparameterwerten, wobei es von den LLR-Werten abhängt, welche Funkverbindungsanpassungsparameterwerte auszuwählen sind, wobei die Funkverbindungsanpassungsparameterwerte durch Modulations- und Kodierungsschemawerte definiert sind, wobei es davon abhängt, ob die LLR-Werte über oder unter einem Schwellenwert liegen, welche Funkverbindungsanpassungsparameterwerte auszuwählen sind, und wobei Auswählen von Funkverbindungsanpassungsparameterwerten Erhöhen oder Verringern aktuell verwendeter Modulations- und Kodierungsschemawerte in Schritten, abhängig davon umfasst, ob die LLR-Werte über oder unter dem Schwellenwert liegen, wobei es von den LLR-Werten abhängt, welche Schrittweite beim Erhöhen oder Verringern der aktuell verwendeten Modulations- und Kodierungsschemawerte zu verwenden ist.

2. Verfahren nach Anspruch 1, wobei der Informationsdecoder einer ist von: einem Low-Density-Parity-Check-, LDPC-Decoder, einem Polarcode-Decoder oder einem Turbo-Decoder.

3. Verfahren nach einem der vorstehenden Ansprüche, wobei der Informationsdecoder ein iterativer Decoder ist.

4. Verfahren nach Anspruch 3, wobei es davon abhängt, wie viele Iterationen vom Informationsdecoder verwendet wurden, um den Codewortblock iterativ zu decodieren, welche Funkverbindungsanpassungsparameterwerte auszuwählen sind.

5. Verfahren nach einem der vorstehenden Ansprüche, wobei es davon abhängt, ob die LLR-Werte in der Binärdarstellung eine zyklische Redundanzprüfung bestehen oder nicht, welche Funkverbindungsanpassungsparameterwerte auszuwählen sind.

6. Verfahren nach einem der vorstehenden Ansprüche, wobei die LLR-Werte als LLR-Out-Werte bezeichnet werden und wobei es davon abhängt, wie sehr sich die LLR-Out-Werte von den als LLR-In-Werte bezeichneten LLR-Werten unterscheiden, die in den Informationsdecoder eingegeben werden, welche Funkverbindungsanpassungsparameterwerte auszuwählen sind.

7. Verfahren nach einer Kombination aus Anspruch 5 und Anspruch 6, wobei es davon abhängt, wie sehr sich die LLR-Out-Werte von den LLR-In-Werten nur dann unterscheiden, wenn die LLR-Out-Werte in binärer Darstellung die zyklische Redundanzprüfung bestehen, welche Funkverbindungsanpassungsparameterwerte auszuwählen sind.

8. Verfahren nach Anspruch 6, wobei es davon abhängt, wie viele LLR-Out-Werte in der Binärdarstellung im Vergleich zu den LLR-In-Werten in der Binärdarstellung umgedreht wurden, welche Funkverbindungsanpassungsparameterwerte auszuwählen sind.

9. Verfahren nach einer Kombination aus Anspruch 5 und Anspruch 8, wobei es davon abhängt, wie viele LLR-Out-Werte in Binärdarstellung im Vergleich zu den LLR-In-Werten in Binärdarstellung nur dann umgedreht wurden, wenn die LLR-Out-Werte in Binärdarstellung die zyklische Redundanzprüfung bestehen, welche Funkverbindungsanpassungsparameterwerte auszuwählen sind.

10. Verfahren nach Anspruch 3, wobei die vom Informationsdecoder nach seiner letzten Iteration ausgegebenen LLR-Werte als endgültige LLR-Werte bezeichnet werden, wobei pro Iteration ein Satz an LLR-Zwischenwerten vom Informationsdecoder ausgegeben wird, und wobei es davon abhängt, wie sehr sich die LLR-Zwischenwerte bei jeder Iteration von den endgültigen LLR-Werten unterscheiden, welche Funkverbindungsanpassungsparameterwerte auszuwählen sind.

11. Verfahren nach Anspruch 3, wobei pro Iteration ein Satz an LLR-Zwischenwerten vom Informationsdecoder ausgegeben wird und wobei es davon abhängt, wie sehr sich die LLR-Zwischenwerte von Iteration zu Iteration ändern, welche Funkverbindungsanpassungsparameterwerte auszuwählen sind.

12. Verfahren nach einem der Ansprüche 1 bis 5, weiter umfassend:

Schätzen (S104) einer Bitfehlerwahrscheinlichkeit, BEP, für den Block von Codewörtern aus den LLR-Werten, und wobei es von der BEP abhängt, welche Funkverbindungsanpassungsparameterwerte auszuwählen sind.

13. Verfahren nach einem der vorstehenden Ansprüche, wobei die Funkverbindungsanpassung eine Outer-Loop-Funkverbindungsanpassung des Sende- und Empfangspunkts (140) ist.

14. Netzwerkknoten (200) zur Funkverbindungsanpassung an einem Sende- und Empfangspunkt (140), wobei der Netzwerkknoten (200) einen Verarbeitungsschaltkreis (210) umfasst, wobei der Verarbeitungsschaltkreis konfiguriert ist, um den Netzwerkknoten (200) zu veranlassen:

Log-Likelihood-Ratio-, LLR-, Werte für einen Block von Codewörtern zu erhalten, wobei die LLR-Werte von einem Informationsdecoder ausgegeben werden, der den Block von Codewörtern decodiert, und wobei der Block von Codewörtern über eine Funkverbindung (160a, 160b) zwischen dem Sende- und Empfangspunkt (140) und einer Endgerätevorrichtung (150a, 150b) kommuniziert worden ist; und
eine Funkverbindungsanpassung der Funkverbindung (160a, 160b) in Abhängigkeit von den LLR-Werten durch Auswählen von Funkverbindungsanpassungsparameterwerten durchzuführen, wobei es von den LLR-Werten abhängt, welche Funkverbindungsanpassungsparameterwerte auszuwählen sind, wobei die Funkverbindungsanpassungsparameterwerte durch Modulations- und Kodierungsschemawerte definiert sind, wobei es davon abhängt, ob die LLR-Werte über oder unter einem Schwellenwert liegen, welche Funkverbindungsanpassungsparameterwerte auszuwählen sind, wobei Auswählen von Funkverbindungsanpassungsparameterwerten Erhöhen oder Verringern aktuell verwendeter Modulations- und Kodierungsschemawerte in Schritten, abhängig davon umfasst, ob die LLR-Werte über oder unter dem Schwellenwert liegen, und wobei es von den LLR-Werten abhängt, welche Schrittweite beim schrittweisen Erhöhen oder Verringern der aktuell verwendeten Modulations- und Kodierungsschemawerte zu verwenden ist.

15. Netzwerkknoten (200) nach Anspruch 14, der weiter konfiguriert ist, um das Verfahren nach einem der Ansprüche 2 bis 13 durchzuführen.

16. Computerprogramm (1220a) zur Funkverbindungsanpassung an einem Sende- und Empfangspunkt (140), wobei das Computerprogramm Computercode umfasst, der, wenn er auf einem Verarbeitungsschaltkreis (210) eines Netzwerkknotens (200) läuft, den Netzwerkknoten (200) veranlasst:

Log-Likelihood-Ratio-, LLR-, Werte für einen Block von Codewörtern zu erhalten (S102), wobei die LLR-Werte von einem Informationsdecoder ausgegeben werden, der den Block von Codewörtern decodiert, und wobei der Block von Codewörtern über eine Funkverbindung (160a, 160b) zwischen dem Sende- und Empfangspunkt (140) und einer Endgerätevorrichtung (150a, 150b) kommuniziert worden ist; und
eine Funkverbindungsanpassung der Funkverbindung (160a, 160b) in Abhängigkeit von den LLR-Werten durch Auswählen von Funkverbindungsanpassungsparameterwerten durchzuführen (S108), wobei es von den LLR-Werten abhängt, welche Funkverbindungsanpassungsparameterwerte auszuwählen sind, wobei die Funkverbindungsanpassungsparameterwerte durch Modulations- und Kodierungsschemawerte definiert sind, wobei es davon abhängt, ob die LLR-Werte über oder unter einem Schwellenwert liegen, welche Funkverbindungsanpassungsparameterwerte auszuwählen sind, und wobei Auswählen von Funkverbindungsanpassungsparameterwerten Erhöhen oder Verringern aktuell verwendeter Modulations- und Kodierungsschemawerte in Schritten, abhängig davon umfasst, ob die LLR-Werte über oder unter dem Schwellenwert liegen, wobei es von den LLR-Werten abhängt, welche Schrittweite beim schrittweisen Erhöhen oder Verringern der aktuell verwendeten Modulations- und Kodierungsschemawerte zu verwenden ist.

## Revendications

1. Procédé d'adaptation de liaison radio à un point d'émission et de réception (140), le procédé étant exécuté par un noeud de réseau (200), le procédé comprenant :

l'obtention (S102) de valeurs de logarithme du rapport de vraisemblance, LLR, pour un bloc de mots de code, dans lequel les valeurs LLR sont émises par un décodeur d'informations décodant le bloc de mots de code, et dans lequel le bloc de mots de code a été communiqué sur une liaison radio (160a, 160b) entre le point d'émission et de réception (140) et un dispositif terminal (150a, 150b) ; et
l'exécution (S108) d'une adaptation de liaison radio de la liaison radio (160a, 160b) en fonction des valeurs LLR en sélectionnant des valeurs de paramètres d'adaptation de liaison radio, dans lequel les valeurs de paramètres d'adaptation de liaison radio à sélectionner dépendent des valeurs LLR, dans lequel les valeurs de paramètres d'adaptation de liaison radio sont définies par des valeurs de schéma de modulation et de codage, dans lequel les valeurs de paramètres d'adaptation de liaison radio à sélectionner dépendent du fait que les valeurs LLR sont supérieures ou inférieures à une valeur seuil, et dans lequel la sélection de valeurs de paramètres d'adaptation de liaison radio implique l'incrémentation ou la décrémentation des valeurs de schéma de modulation et de codage actuellement utilisées par paliers en fonction du fait que les valeurs LLR sont supérieures ou inférieures à la valeur seuil, dans lequel la taille de palier à utiliser lors de l'incrémentation ou de la décrémentation des valeurs de schéma de modulation et de codage actuellement utilisées dépend des valeurs LLR.

2. Procédé selon l'une quelconque de la revendication 1, dans lequel le décodeur d'informations est l'un quelconque des suivants : un décodeur à contrôle de parité à faible densité, LDPC, un décodeur de code polaire, un décodeur turbo.

3. Procédé selon l'une quelconque des revendications précédentes, dans lequel le décodeur d'informations est un décodeur itératif.

4. Procédé selon la revendication 3, dans lequel les valeurs de paramètres d'adaptation de liaison radio à sélectionner dépendent du nombre d'itérations utilisées par le décodeur d'informations pour décoder de manière itérative le bloc de mots de code.

5. Procédé selon l'une quelconque des revendications précédentes, dans lequel les valeurs de paramètres d'adaptation de liaison radio à sélectionner dépendent du fait que les valeurs LLR en représentation binaire réussissent ou échouent à un contrôle de redondance cyclique.

6. Procédé selon l'une quelconque des revendications précédentes, dans lequel les valeurs LLR sont désignées comme étant des valeurs LLR-out, et dans lequel les valeurs de paramètres d'adaptation de liaison radio à sélectionner dépendent de la mesure dans laquelle les valeurs LLR-out diffèrent des valeurs LLR, désignées comme étant des valeurs LLR-in, entrées dans le décodeur d'informations.

7. Procédé selon une combinaison de la revendication 5 et de la revendication 6, dans lequel les valeurs de paramètres d'adaptation de liaison radio à sélectionner dépendent de la mesure dans laquelle les valeurs LLR-out diffèrent des valeurs LLR-in uniquement lorsque les valeurs LLR-out en représentation binaire réussissent le contrôle de redondance cyclique.

8. Procédé selon la revendication 6, dans lequel les valeurs de paramètres d'adaptation de liaison radio à sélectionner dépendent du nombre de valeurs LLR-out en représentation binaire qui ont été inversées par rapport aux valeurs LLR-in en représentation binaire.

9. Procédé selon une combinaison de la revendication 5 et de la revendication 8, dans lequel les valeurs de paramètres d'adaptation de liaison radio à sélectionner dépendent du nombre de valeurs LLR-out en représentation binaire qui ont été inversées par rapport aux valeurs LLR-in en représentation binaire uniquement lorsque les valeurs LLR-out en représentation binaire réussissent le contrôle de redondance cyclique.

10. Procédé selon la revendication 3, dans lequel les valeurs LLR délivrées en sortie du décodeur d'informations après son itération finale sont désignées comme étant des valeurs LLR finales, dans lequel un ensemble de valeurs LLR intermédiaires est délivré en sortie du décodeur d'informations à chaque itération, et dans lequel les valeurs de paramètres d'adaptation de liaison radio à sélectionner dépendent de la mesure dans laquelle les valeurs LLR intermédiaires à chaque itération diffèrent des valeurs LLR finales.

11. Procédé selon la revendication 3, dans lequel un ensemble de valeurs LLR intermédiaires est délivré en sortie du décodeur d'informations à chaque itération, et dans lequel les valeurs de paramètres d'adaptation de liaison radio à sélectionner dépendent de la mesure dans laquelle les valeurs LLR intermédiaires changent d'une itération à l'autre.

12. Procédé selon l'une quelconque des revendications 1 à 5, comprenant en outre :
l'estimation (S104) d'une probabilité d'erreur binaire, BEP, pour le bloc de mots de code à partir des valeurs LLR, et dans lequel les valeurs de paramètres d'adaptation de liaison radio à sélectionner dépendent de la BEP.

15

13. Procédé selon l'une quelconque des revendications précédentes, dans lequel l'adaptation de liaison radio est une adaptation de liaison radio en boucle externe du point d'émission et de réception (140).

14. Noeud de réseau (200) pour l'adaptation de liaison radio à un point d'émission et de réception (140), le noeud de réseau (200) comprenant des circuits de traitement (210), les circuits de traitement étant configurés pour amener le noeud de réseau (200) à :

obtenir des valeurs de logarithme du rapport de vraisemblance, LLR, pour un bloc de mots de code, dans lequel les valeurs LLR sont émises par un décodeur d'informations décodant le bloc de mots de code, et dans lequel le bloc de mots de code a été communiqué sur une liaison radio (160a, 160b) entre le point d'émission et de réception (140) et un dispositif terminal (150a, 150b) ; et
effectuer une adaptation de liaison radio de la liaison radio (160a, 160b) en fonction des valeurs LLR en sélectionnant des valeurs de paramètres d'adaptation de liaison radio, dans lequel les valeurs de paramètres d'adaptation de liaison radio à sélectionner dépendent des valeurs LLR, dans lequel les valeurs de paramètres d'adaptation de liaison radio sont définies par des valeurs de schéma de modulation et de codage, dans lequel les valeurs de paramètres d'adaptation de liaison radio à sélectionner dépendent du fait que les valeurs LLR sont supérieures ou inférieures à une valeur seuil, dans lequel la sélection de valeurs de paramètres d'adaptation de liaison radio implique l'incrémentation ou la décrémentation des valeurs de schéma de modulation et de codage actuellement utilisées par paliers en fonction du fait que les valeurs LLR sont supérieures ou inférieures à la valeur seuil, et dans lequel la taille de palier à utiliser lors de l'incrémentation ou de la décrémentation des valeurs de schéma de modulation et de codage actuellement utilisées dépend des valeurs LLR.

15. Noeud de réseau (200) selon la revendication 14, étant en outre configuré pour effectuer le procédé selon l'une quelconque des revendications 2 à 13.

16. Programme informatique (720) pour l'adaptation de liaison radio à un point d'émission et de réception (140), le programme informatique comprenant un code informatique qui, lorsqu'il est exécuté sur des circuits de traitement (210) d'un noeud de réseau (200), amène le noeud de réseau (200) à :

obtenir (S102) des valeurs de logarithme du rapport de vraisemblance, LLR, pour un bloc de mots de code, dans lequel les valeurs LLR sont émises par un décodeur d'informations décodant le bloc de mots de code, et dans lequel le bloc de mots de code a été communiqué sur une liaison radio (160a, 160b) entre le point d'émission et de réception (140) et un dispositif terminal (150a, 150b) ; et
effectuer (S108) une adaptation de liaison radio de la liaison radio (160a, 160b) en fonction des valeurs LLR en sélectionnant des valeurs de paramètres d'adaptation de liaison radio, dans lequel les valeurs de paramètres d'adaptation de liaison radio à sélectionner dépendent des valeurs LLR, dans lequel les valeurs de paramètres d'adaptation de liaison radio sont définies par des valeurs de schéma de modulation et de codage, dans lequel les valeurs de paramètres d'adaptation de liaison radio à sélectionner dépendent du fait que les valeurs LLR sont supérieures ou inférieures à une valeur seuil, et dans lequel la sélection de valeurs de paramètres d'adaptation de liaison radio implique l'incrémentation ou la décrémentation des valeurs de schéma de modulation et de codage actuellement utilisées par paliers en fonction du fait que les valeurs LLR sont supérieures ou inférieures à la valeur seuil, dans lequel la taille de palier à utiliser lors de l'incrémentation ou de la décrémentation des valeurs de schéma de modulation et de codage actuellement utilisées dépend des valeurs LLR.

Fig. 1

**S102**
Obtain LLR values for block of codewords

**S104**
Estimate BEP for block of codewords from LLR vlues

**S106**
Estimate SINR for block of codewords from LLR values

**S108**
Perform radio link adaptation depending on LLR values

Fig. 2

Fig. 3

Fig. 4

| | |
|---|---|
| **210**<br>Processing<br>circuitry | **220**<br>Comm.<br>interface |
| **230**<br>Storage<br>medium | |

710

**200**

### Fig. 5

| | |
|---|---|
| **210a**<br>Obtain | **210b**<br>Estimate |
| **210c**<br>Estimate | **210d**<br>Adapt |

**200**

### Fig. 6

710

720

730

### Fig. 7

Fig. 8

510 Host computer

511
SW

512
Host application

515
HW

516
Communication
interface

518
Processing
circuitry

560

520 Network node

521
SW

525
HW

526
Communication
interface

527
Radio interface

528
Processing
circuitry

570

530 Terminal device

531
SW

532
Client application

535
HW

537
Radio interface

538
Processing
circuitry

550

500

Fig. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010128765 A

- US 20080155373 A